# EUROPEAN PATENT APPLICATION

(11) **EP 4 761 352 A1**
(43) Date of publication of application: **17.06.2026**
(21) Application number: 23948776.2
(22) Date of filing: 11.08.2023
(51) Int. Cl.: H04W 36/00, H04W 28/24

(54) **SERVICE PROCESSING METHOD AND APPARATUS**

(71) Applicant: Beijing Xiaomi Mobile Software Co., Ltd., Beijing 100085 (CN)
(72) Inventor: WU, Jinhua, Beijing 100085 (CN); MAO, Yuxin, Beijing 100085 (CN); LIU, Jianning, Beijing 100085 (CN); SHEN, Yang, Beijing 100085 (CN)
(74) Representative: Stöckeler, Ferdinand
(86) International application number: PCT/CN2023/112777
(87) International publication number: WO 2025/035341

(57) **Abstract**

The present disclosure relates to a service processing method and apparatus. The method comprises: a first access network device sends first indication information to a first network element, wherein the first indication information is used for indicating whether the first access network device supports processing based on a packet data unit (PDU) set. In this way, the first network element can determine whether the first access network device supports processing based on the PDU set, so as to ensure service continuity and improve the quality of service.

## Description

### TECHNICAL FIELD

The present disclosure relates to the field of communication technology, and specifically to a method and an apparatus for processing a service.

### BACKGROUND

A mobile media service, cloud augmented reality (AR)/virtual reality (VR) and other extended reality (XR) services, cloud gaming, video-based remote control of machines or drones and other services are expected to contribute an increasing share of traffic to the 5G network. The XR services also involve multimodal data streams. These multimodal data may be data inputs describing the same service or application input from the same device or different devices (including sensors), and these data may be output to one or more destination terminals. There is often a correlation among data streams within the multimodal data, such as synchronization between an audio stream and a video stream, synchronization between touch and vision, etc.

### SUMMARY

Embodiments of the present disclosure provide a method and an apparatus for processing a service, capable of addressing an issue of how to handle coexistence of an unmarked protocol data unit (PDU) and a marked PDU within a quality of service (QoS) flow.

Embodiments of the present disclosure provide a method and an apparatus for processing a service.

According to a first aspect of embodiments of the present disclosure, a method for processing a service is provided. The method includes: sending, by a first access network device, first indication information to a first network element, in which the first indication information indicates whether the first access network device supports PDU set based handling; determining, by the first access network device, to take a marked PDU in a data forwarding packet as an unmarked PDU for handling, in which the first access network device does not support the PDU set based handling and the data forwarding packet includes the marked PDU; or determining, by the first access network device, to take a marked PDU in a data forwarding packet as an unmarked PDU for handling before unmarked PDU handling ends, in which the first access network device supports the PDU set based handling and the data forwarding packet includes the marked PDU.

According to a second aspect of embodiments of the present disclosure, a method for processing a service is provided. The method includes: sending, by a first access network device, first indication information to a first network element, in which the first indication information indicates whether the first access network device supports PDU set based handling; receiving, by the first access network device, a priority indication from the first network element; and performing marked PDU handling and unmarked PDU handling according to the priority indication, in which the priority indication indicates at least one of: prioritizing the PDU set based handling after receiving the marked PDU; prioritizing unmarked PDU handling after receiving the marked PDU; prioritizing self-execution based on a local configuration of the first access network device after receiving the marked PDU; or prioritizing execution according to an operation, administration and maintenance (OAM) configuration after receiving the marked PDU.

According to a second aspect of embodiments of the present disclosure, a storage medium for storing instructions is provided. When the instructions are executed on a communication device, the communication device is caused to perform the method according to the first aspect or the second aspect above.

### BRIEF DESCRIPTION OF THE DRAWINGS

In order to more clearly illustrate the technical solution in embodiments of the disclosure, the accompanying drawings to be used in embodiments of the disclosure will be described below. The following accompanying drawings are only a part of embodiments of the present disclosure, and do not constitute a limitation on the scope of protection of the present disclosure.
FIG. 1 is a schematic diagram of an architecture of a communication system according to an embodiment of the present disclosure.
FIG. 2 is a schematic diagram of a 5G networking architecture according to an embodiment of the present disclosure.
FIG. 3 is a flowchart of a method for processing a service according to an embodiment of the present disclosure.
FIG. 4A is a flowchart of another method for processing a service according to an embodiment of the present disclosure.
FIG. 4B is a flowchart of another method for processing a service according to an embodiment of the present disclosure.
FIG. 5A is a block diagram of a communication device according to an embodiment of the present disclosure.
FIG. 5B is a block diagram of a chip according to an embodiment of the present disclosure.

### DETAILED DESCRIPTION

According to the first aspect, embodiments of the present disclosure provide a method for processing a service. The method includes: sending, by a first access network device, first indication information to a first network element, in which the first indication information indicates whether the first access network device supports packet data unit (PDU) set based handling; determining, by the first access network device, to take a marked PDU in a data forwarding packet as an unmarked PDU for handling, in which the first access network device does not support the PDU set based handling and the data forwarding packet includes the marked PDU; or determining, by the first access network device, to take a marked PDU in a data forwarding packet as an unmarked PDU for handling before unmarked PDU handling ends, in which the first access network device supports the PDU set based handling and the data forwarding packet includes the marked PDU.

According to the second aspect, embodiments of the present disclosure provide a method for processing a service. The method includes: sending, by a first access network device, first indication information to a first network element, in which the first indication information indicates whether the first access network device supports PDU set based handling; receiving, from the first access network device, a priority indication from the first network element; and performing marked PDU handling and unmarked PDU handling according to the priority indication, in which the priority indication indicates at least one of: prioritizing the PDU set based handling after receiving the marked PDU; prioritizing unmarked PDU handling after receiving the marked PDU; prioritizing self-execution based on a local configuration of the first access network device after receiving the marked PDU; or prioritizing execution according to an operation, administration and maintenance (OAM) configuration after receiving the marked PDU.

According to a third aspect, embodiments of the present disclosure provide a storage medium for storing instructions. When the instructions are running on a communication device, the communication device is caused to perform the method described in optional implementations of the first aspect or the second aspect.

According to a fourth aspect, embodiments of the present disclosure provide a program product. When the program product is executed by a communication device, the communication device is caused to perform the method described in optional implementations of the first aspect or the second aspect.

According to a fifth aspect, embodiments of the present disclosure provide a computer program. When the computer program is running on a computer, the computer is caused to perform the method described in optional implementations of the first aspect, the second aspect, or the third aspect.

According to a sixth aspect, embodiments of the present disclosure provide a chip or a chip system. The chip or the chip system includes a processing circuit, configured to perform the method described in optional implementations of the first aspect or the second aspect.

Embodiments of the present disclosure provide a method and an apparatus for processing a service. In some embodiments, terms such as "method for processing a service", "method for processing information", and "communication method" may be used interchangeably.

Embodiments of the present disclosure are not exhaustive and only serve as illustrations of some embodiments, but not as specific limitations to the scope of protection of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

Terms used in embodiments of the present disclosure are for a purpose of describing specific embodiments only and are not intended to limit the present disclosure.

In embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in the embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, "comprising A", "including A", "configured to indicate A", or "carrying A" may be interpreted as directly carrying A or indirectly indicating A.

In some embodiments, terms such as "time/frequency" and "time-frequency domain" refer to time domain and/or frequency domain.

In some embodiments, terms such as "in response to...", "in response to determining...", "in a case that...", "when...", "upon", "while", "if..." etc. may be used interchangeably.

In some embodiments, the terms such as "greater than", "greater than or equal to", "not less than", "more than", "more than or equal to", "not fewer than", "higher than", "higher than or equal to", "not lower than", "above", etc. may be used interchangeably. The terms such as "less than", "less than or equal to", "not greater than", "fewer than", "fewer than or equal to", "not more than", "lower than", "lower than or equal to", "not higher than", "below" etc. may also be used interchangeably.

In some embodiments, "apparatus" may be interpreted as either physical or virtual. Names are not limited to those recorded in the embodiments. The terms such as "apparatus", "equipment", "device", "circuit", "network element", "node", "function", "unit", "section", "system", "network", "chip", "chip system", "entity", "subject", etc. may be used interchangeably.

In some embodiments, "network" may be interpreted as a device (e.g., an access network device, a core network device, etc.) included within a network.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, the core network device, or the network device may be replaced by the terminal. For example, embodiments of the present disclosure may also be applied to a structure where communication among the access network device, the core network device, or the network device and the terminal is replaced by communication among a plurality of terminals (e.g., device-to-device (D2D), vehicle-to-everything (V2X), etc.). In this case, a structure where the terminal has all or part of functions of the access network device may be adopted. Furthermore, terms such as "uplink", "downlink" may also be replaced with terms corresponding to communication between terminals (e.g., "sidelink"). For example, uplink channel, downlink channel, etc., may be replaced with sidelink channel; uplink, downlink, etc., may be replaced with sidelink.

In some embodiments, the terminal may be replaced by the access network device, the core network device, or the network device. In this case, a structure where the access network device, the core network device, or the network device has all or part of functions of the terminal may be adopted.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

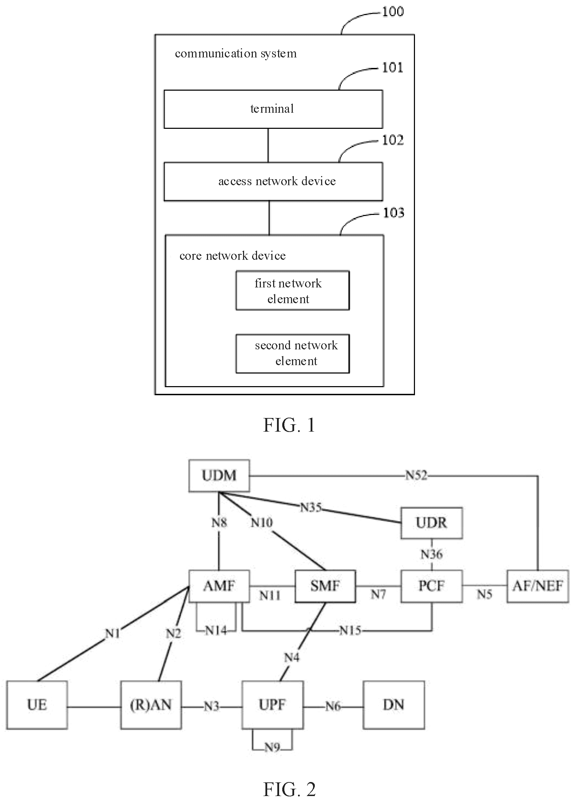

FIG. 1 is a schematic diagram of an architecture of a communication system according to embodiments of the present disclosure.

As shown in FIG. 1, a communication system 100 includes a terminal 101, an access network device 102, and a core network device 103.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the terminal may also be referred to as a terminal device, a user equipment, etc., and the name is interchangeable, which is not specifically limited in the embodiments of the present disclosure.

In some embodiments, the access network device 102 is, for example, a node or a device that connects the terminal to a wireless network. The access network device may include at least one of an evolved NodeB (eNB) in a 5G communication system, a next generation eNB (ng-eNB), a next generation NodeB (gNB), a node B (NB), an Home node B (HNB), an HOme evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited herein.

In some embodiments, the access network device 102 may also be a satellite.

In some embodiments, the core network device 103 may be a device, including a plurality of network elements such as a first network element, a second network element, and a third network element, or may be a plurality of devices or device groups, including a plurality of network functions. The network element may also be called a network function, which may be virtual or physical. The core network includes, for example, at least one of an evolved packet core (EPC), a 5G core network (5GCN), or a next generation core (NGC).

In some embodiments, the first network element is, for example, a session management function (SMF).

In some embodiments, the second network element is, for example, a user plane function (UPF).

In some embodiments, the first network element is used to perform PDU session management for the terminal, execute a control policy delivered by a policy control function (PCF), select a UPF network element, allocate an IP addresses for the terminal when a PDU type is IP, etc.

In some embodiments, the second network element is used to implement policy control functions such as charging per session/service flow level, QoS bandwidth guarantee and mobility management, and a user equipment policy decision.

It may be understood that the communication system in embodiments of the present disclosure is to clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solution in embodiments of the disclosure is also applicable to similar technical problems.

The following embodiments of the present disclosure may be applied to the communication system 100 shown in FIG. 1, or to some entities, which are not limited to this. Entities in FIG. 1 are illustrative. The communication system may include all or some of the entities in FIG. 1, or may include other entities not shown in FIG. 1. The entities may be in any number and in any form. Connection relationships between the entities are illustrative. The entities may be unconnected or may be connected. They may be connected in any manner, for example, they may be directly connected or indirectly connected, or may be connected via a wired or wireless way.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, the combination of a plurality of systems (e.g., the combination of LTE or LTE-A with 5G) may be applied.

FIG. 2 is a schematic diagram of a 5G networking architecture according to embodiments of the present disclosure.

As shown in FIG. 2, an introduction to network functions related to the 5G networking architecture are provided below.

Application function (AF): The AF is also called as an application controller, is mainly used to transfer application-side requirements to a network side, such as quality of service (QoS) requirements, user state event subscription, etc. The AF may be an application function entity of a third-party application or an application service deployed by an operator, such as IMS voice call service. When the application function entity of the third-party application interacts with the core network, it may undergo authorization processing via a network exposure function (NEF). For example, the application function entity of the third-party application directly sends a request message to the NEF, and the NEF verifies whether the AF is allowed to send the request message. If verification passes, the request message is forwarded to a corresponding PCF or a unified data management function (UDM).

PCF: The PCF is mainly used to implement policy control functions such as charging per session/service flow level, QoS bandwidth guarantee and mobility management, and a user equipment policy decision.

UDM: The UDM is mainly used to implement data management functions such as subscription information management and user access authorization.

Access and mobility management function (AMF): The AMF is mainly used to implement functions such as mobility management, access authentication/authorization for the terminal. In addition, the AMF is also responsible for transmitting a user policy between the terminal and the PCF.

Session management function (SMF): The SMF is mainly used to manage, for the terminal, a PDU session, execute a control policy delivered by the PCF, select a UPF, allocate an IP addresses for the terminal when a PDU type is IP, etc.

UPF: The UPF is mainly used as an interface between the terminal and a data network to complete functions such as user plane data forwarding, charging statistics based on a session/flow level, and bandwidth limitation.

Unified data repository (UDR): The UDR is mainly responsible for data storage and retrieval functions for data types such as subscription information, policy data, and application data. The UDR may interconnect with the UDM, the PCF, the NEF, etc., via interfaces to enable an access or invocation to corresponding network elements.

Of course, the core network may also include other network functions besides those illustrated above, which are not listed here.

It needs to be noted that embodiments of the present disclosure do not limit names of corresponding network functions that implement each function. They may also implement other functions or be integrated with other functional network elements, and may also be called as other names.

In the 5G networking architecture shown in FIG. 2, main functions of some related communication interfaces between network functions and some related communication interfaces between a network function and a device are introduced below.

N1 interface: This is a signaling interface between an AMF network element and a terminal, independent of an access network. The N1 interface is used to exchange a signaling message between a core network and the terminal, and may be used in procedures when the terminal registers to the network, the terminal establishes a PDU session, and the network side configures a terminal policy.

N2 interface: This is an interface between the AMF network element and an RAN device, and used to transfer information such as radio bearer control information from the core network to the RAN device.

N3 interface: This is an interface between the (R)AN device and a UPF network element, and used to transfer service data of the terminal between the RAN device and the UPF network element.

N4 interface: This is an interface between a SMF network element and the UPF network element, and is used to transfer information between a control plane and a user plane. The N4 interface may be used in procedures when a control plane terminal completes a network entry operation based on subscription information with an operator.

N6 interface: This is an interface between the UPF network element and a data network (DN), and is used to transfer service data of the terminal between the UPF network element and the DN.

N7 interface: This is an interface between the PCF network element and the SMF network element, and is used to deliver information such as control policy at a PDU session granularity and a service data flow granularity.

N8 interface: This is an interface between the AMF network element and the UDM network element, and is used for the AMF network element to obtain access and mobility management-related subscription information and authentication data from the UDM network element, and for the AMF network element to register current mobility management-related information of the terminal to the UDM network element, etc.

N10 interface: This is an interface between the SMF network element and the UDM network element, and is used for the SMF network element to obtain session management-related subscription information from the UDM network element, and for the SMF network element to register current session-related information of the terminal with the UDM network element, etc.

N11 interface: This is an interface between the SMF network element and the AMF network element, and is used to transfer PDU session tunnel information between the RAN device and the UPF network element, a control message sent to the terminal, radio resource control information sent to the RAN device, etc.

A mobile media service, cloud augmented reality (AR)/virtual reality (VR) and other extended reality (XR) services, cloud gaming, video-based remote control of machines or drones and other services are expected to contribute an increasing share of traffic to the 5G network. The XR services also involve multimodal data streams. These multimodal data may be data inputs describing the same service or application input from the same device or different devices (including sensors), and these data may be output to one or more destination terminals. There is often a correlation among data streams within the multimodal data, such as synchronization between an audio and a video stream, synchronization between touch and vision, etc. Data streams of such media services themselves, different data streams, and requirements on network transmission from these service data streams all share some common characteristics. Effective identification and utilization of these characteristics may be more conducive to transmission and control of the network and the service, and also more conducive to service guarantee and user experience.

An XRM (XR and media) service requires the 5th generation system (5GS) to comprehensively consider QoS characteristics of related data streams of the service, for example, whether parameters such as a delay-critical guaranteed bit rate (GBR) data stream, a guaranteed flow bit rate (GFBR), a packet delay budget (PDB), and a maximum data burst volume (MDBV) may be simultaneously satisfied and coordinated consistently. This involves consistency guarantee of QoS authorization and execution among a plurality of XRM data streams of one terminal and XRM data streams of a plurality of terminals.

In a 5G system, it is supported enhancement, by an AF, in a per PDU set based handling function on an XRM service data stream, and it is supported enhancement, by the AF, in QoS awareness and guarantee for the XRM service data stream and enhancement in user quality of experience (QoE). This includes PDU set-specific QoS characteristics and protocol descriptions provided by the AF:
- A PDU set delay budget (PSDB);
- A PDU set error rate (PSER); and
- PDU set integrated handling information (PSIHI).

The SMF and the UPF may, in combination with protocol descriptions and a protocol header extension provided by the AF, execute a general packet radio service tunnelling protocol for a user plane (GTP-U) header extension for a corresponding PDU in a corresponding service data flow (SDF) PDU set, and carry PDU set information. The PDU set information is used by a next generation-radio access network (NG-RAN) for PDU set based QoS handling. The PDU set information includes:
- A PDU set sequence number;
- An indication of an end PDU of the PDU set;
- A PDU sequence number within the PDU set;
- A PDU set size (in bytes); and
- PDU set importance, used to identify relative importance of the PDU Set compared to other PDU sets within a QoS flow.

The UPF may map an AF SDF service data stream to a QoS flow based on a packet detection rule (PDR) rule; encapsulate an associated PDU into the PDU set; and execute a related QoS policy of a relevant set such as a PSER and a PSDB for the PDU set within the QoS flow.

QoS handling supported by the 5GS system supports, within the same QoS flow, either a PDU based QoS rule and parameter policy, or a PDU set based QoS rule and parameter policy. That is, only one set of QoS parameters is simultaneously active for handling within one QoS flow, which is called as a PDU based QoS mechanism or a PDU set based QoS mechanism.

However, in an actual network, there are NG-RANs with non-homogenous functional support, for example, a PDU set non-supporting NG-RAN and a PDU set supporting NG-RAN. Due to service continuity requirements of the XR, data forwarding needs to be performed for downlink data during a handover (HO) procedure (e.g., terminal mobility). The data forwarding supports a direct mode and an indirect mode. In the direct mode, a source NG-RAN performs forwarding to a target NG-RAN. In the indirect mode, the UPF performs data forwarding to the target NG-RAN. It needs to be noted that, in the indirect mode, the UPF performing the data forwarding may not necessarily be a UPF corresponding to the source NG-RAN.

When an HO occurs between the PDU set supporting NG-RAN and the PDU set non-supporting NG-RAN, especially from a PDU set non-supporting source NG-RAN to a PDU set supporting target NG-RAN, both the unmarked PDU and the marked PDU exist within the same QoS flow.

However, the 5GS system does not support a scenario where both the unmarked PDU and the marked PDU exist within the same QoS flow, and cannot guarantee a QoS of a corresponding QoS flow.

How to handle QoS handling when both the unmarked PDU and the marked PDU exist within the QoS flow is a problem that should be solved for the 5GS to guarantee XR interactive services like cloud gaming.

Based on this, embodiments of the present disclosure provide a method and an apparatus for processing a service, capable of addressing an issue of how to handle coexistence of the unmarked PDU and the marked PDU within a QoS flow, which ensures service continuity and improves a QoS.

In some embodiments, names of information and so on are not limited to names recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "uplink", "up link", "physical uplink", etc. may be used interchangeably; terms such as "downlink", "down link", "physical downlink", etc. may be used interchangeably; and terms such as "side", "sidelink", "side communication", "sidelink communication", "direct", "direct link", "direct communication", etc. may be used interchangeably.

In some embodiments, terms such as "downlink control information (DCI)", "downlink (DL) assignment", "DL DCI", "uplink (UL) grant", "UL DCI", etc. may be used interchangeably.

In some embodiments, terms such as "physical downlink shared channel (PDSCH)", "DL data", etc. may be used interchangeably; and terms such as "physical uplink shared channel (PUSCH)", "UL data", etc. may be used interchangeably.

In some embodiments, terms such as "radio", "wireless", "radio access network (RAN)", "access network (AN)", "RAN-based", etc. may be used interchangeably.

In some embodiments, terms such as "moment", "time point", "time position", etc. may be used interchangeably; and terms such as "duration", "time period", "time window", "window", "time", etc. may be used interchangeably.

In some embodiments, terms such as "resource block (RB)", "physical resource block (PRB)", "sub-carrier group (SCG)", "resource element group (REG)", "PRB pair", "RB pair", "resource element (RE)", "sub-carrier", etc. may be used interchangeably.

In some embodiments, terms such as "wireless access scheme" and "waveform" may be used interchangeably.

In some embodiments, terms such as "frame", "radio frame", "subframe", "slot", "sub-slot", "mini-slot", "symbol", "transmission time interval (TTI)", etc. may be used interchangeably.

In some embodiments, "acquire", "obtain", "get", "receive", "transmission", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "transmit", "report", "deliver", "transmission", "bidirectional transmission", "send and/or receive" may be used interchangeably.

In some embodiments, terms such as "certain", "preset", "predetermined", "set", "indicated", "a/an", "any", "first", etc. may be used interchangeably. "Certain A", "preset A", "predetermined A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, judging or determining may be performed using a value represented by 1 bit (0 or 1), or by a true value or a false value represented by true or false (Boolean), or by numerical comparison (e.g., comparison with a predetermined value), which is not limited herein.

To facilitate understanding of embodiments of the present disclosure, examples of embodiments are provided below.

QoS handling supported by the 5GS system supports, within the same QoS flow, either a PDU based QoS rule and parameter policy, or a PDU set based QoS rule and parameter policy. That is, only one set of QoS parameters is simultaneously active for handling within one QoS flow, which is called as a PDU based QoS mechanism or a PDU set based QoS mechanism.

However, in an actual network, there are NG-RANs with non-homogenous functional support, for example, a PDU set non-supporting NG-RAN and a PDU set supporting NG-RAN. Due to service continuity requirements of the XR, data forwarding needs to be performed for downlink data during an HO procedure (e.g., terminal mobility). The data forwarding supports a direct mode and an indirect mode. In the direct mode, a source NG-RAN performs forwarding to a target NG-RAN. In the indirect mode, the UPF performs data forwarding to the target NG-RAN. It needs to be noted that, in the indirect mode, the UPF performing the data forwarding may not necessarily be a UPF corresponding to the source NG-RAN.

When an HO occurs between the PDU set supporting NG-RAN and the PDU set non-supporting NG-RAN, especially from a PDU set non-supporting source NG-RAN to a PDU set supporting target NG-RAN, both the unmarked PDU and the marked PDU exist within the same QoS flow.

However, the 5GS system does not support a scenario where both the unmarked PDU and the marked PDU exist within the same QoS flow, and cannot guarantee a QoS of a corresponding QoS flow.

How to handle a problem that both the unmarked PDU and the marked PDU exist within the QoS flow is a problem that should be solved for the 5GS to guarantee XR interactive services like cloud gaming.

In embodiments of the present disclosure, a NG-RAN does not support mixed handling of a marked PDU and an unmarked PDU within the same QoS flow, and the marked PDU is handled as the unmarked PDU. The handling may be executed within a specific time. The specific time may be set according to a configuration, or may be set based on a received end marker packet and/or a transition handling window, etc. Further, information such as the transition handling window may be sent to a SMF. Specific implementations are as follows.

During an Xn HO procedure and an N2 HO procedure of the NG-RAN, a target NG-RAN provides first indication information to the SMF, the first indication information indicates whether a target NG-RAN node supports PDU set based handling.

In some embodiments, the first indication information is included in a path switch request message during the Xn HO procedure, or the first indication information is included in an HO request acknowledge message during the N2 HO procedure.

In some embodiments, the source NG-RAN supports the PDU set based handling, and the target NG-RAN of the HO does not support the PDU set based handling. If the target NG-RAN receives a data forwarding packet, for example, a data packet directly forwarded from the source NG-RAN or indirectly forwarded from the UPF, since the source NG-RAN supports the PDU set based handling, the data forwarding packet may include the marked PDU. After receiving the data forwarding packet, the target NG-RAN may handle the marked PDU as the unmarked PDU, ignore a PDU set QoS parameter, execute a PDU QoS parameter, and ignore a protocol header extension used to identify the PDU set information in the marked PDU).

In some embodiments, the source NG-RAN does not support the PDU set based handling, and the target NG-RAN of the HO supports the PDU set based handling. If the target NG-RAN receives a data forwarding packet, for example, a data packet directly forwarded from the source NG-RAN or indirectly forwarded from the UPF, since the source NG-RAN does not support the PDU set based handling, the data forwarding packet may include the unmarked PDU. The target NG-RAN receives the data forwarding packet (a data packet received over a forwarding tunnel and before an end marker packet). Before handling of the unmarked PDU finishes, the target NG-RAN handles a received marked PDU as the unmarked PDU (so that all PDUs are handled as the unmarked PDU at the same time), ignores a PDU set QoS parameter of the marked PDU and uses a PDU QoS parameter, i.e., ignores a protocol header extension used to identify the PDU set information).

Furthermore, after the handling of the unmarked PDU finishes, the target NG-RAN may handle the marked PDU according to the PDU set QoS parameter and the PDU set information in the protocol header extension (or the PDU set information configured by the UPF, and the PDU set information in a protocol description).

In some embodiments, the source NG-RAN does not support the PDU set based handling, and the target NG-RAN of the HO supports the PDU set based handling. If the target NG-RAN receives a data forwarding packet, for example, a data packet directly forwarded from the source NG-RAN or indirectly forwarded from the UPF, since the source NG-RAN does not support the PDU set based handling, the data forwarding packet may include the unmarked PDU. The target NG-RAN may start a specific window (for example, start a timer). During a period counted by the timer, the target NG-RAN may handle a received marked PDU as the unmarked PDU, and ignore the PDU set QoS parameter. After the timer expires, the target NG-RAN may handle the marked PDU according to the PDU set QoS parameter and PDU set information in a protocol header extension.

In a possible implementation, the target NG-RAN starts the above timer after receiving the end marker packet. A duration of the timer is a continued handling HO window duration (handling of the marked PDU as the unmarked PDU during the HO procedure may have already started before receiving the end marker packet. It is easier to determine a remaining time after receiving the end marker packet).

In a possible implementation, the target NG-RAN starts the above timer after receiving the PDU set QoS parameter from the SMF. A duration of the timer is a continued handling HO window duration (handling of the marked PDU as the unmarked PDU during the HO procedure may have already started before receiving the PDU set QoS parameter from the SMF.).

A handling HO window duration may be greater than or equal to a duration required from starting of the timer to a completion of unmarked PDU handling as predetermined by the target NG-RAN (for example, based on a local configuration or an OA configuration or a received end marker packet or a received PDU set related QoS parameter).

In a possible implementation, after receiving the PDU set QoS parameter from the SMF, the target NG-RAN may send second indication information to the SMF. The second indication information indicates whether the target NG-RAN accepts (accepts or rejects) a received PDU set QoS parameter. If the NG-RAN rejects the PDU set QoS parameter, an NG-RAN PDU set QoS handling function is not activated; or if the NG-RAN accepts the PDU set QoS parameter, the NG-RAN PDU set QoS handling function is activated.

In some embodiments, the SMF may request the target NG-RAN to activate PDU set based QoS handling for a given QoS flow. The target NG-RAN may provide to the SMF an indication of whether the PDU Set QoS parameter is accepted (accepted or rejected).

In some embodiments, the NG-RAN may provide to the SMF an indication of whether to activate the PDU set QoS parameter and a deferred apply time, or a deferred activation time (related to a start time (or a time window) of the PDU set QoS parameter applied). The time may be determined based on a timer for the marked PDU handling in the target NG-RAN.

In some embodiments, based on an indication of the target NG-RAN or the deferred apply time/the deferred activation time, the SMF configures a PDU session anchor (PSA) UPF to activate/deactivate/stop a PDU set identification and marking (performing PDU set-related identification and protocol header extension marking on a PDU data packet).

In some embodiments, the PSA UPF sends an end marker packet to the target NG-RAN at an end of a complete PDU set. In other words, the PSA UPF starts performing PDU set identification and protocol header extension marking from a beginning of the complete PDU set (e.g., first data packet) and stops or ends performing the PDU set identification and the protocol header extension marking at the end of the complete PDU set (e.g., last data packet) (The end marker packet is sent right after the last data packet of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It starts doing so from the complete PDU set. A first PDU set includes a PDU overlapped with a data packet sending through a source forwarding tunnel (an overlapping data packet has already been sent on a source tunnel, but it is not an end of the PDU set, for example, it is a first half of the set. Then this part and an unsent second half are integrated as the complete PDU set and are sent in a new tunnel), if the end marker packet is not sent at the end of the complete PDU set (e.g., sent in the middle of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It sends a left packet of a PDU set through a source forwarding tunnel as an individual data packet. Then it starts doing so from the complete PDU set, and performs a packet identification and marks the PDU set information into the protocol header extension, if the end marker packet is not sent at the end of the complete PDU set (e.g., sent in the middle of the PDU set).

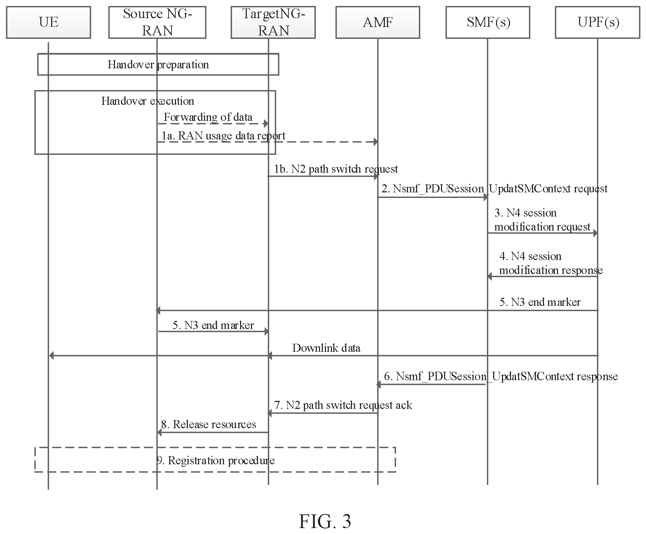

In an embodiment, as shown in FIG. 3, a scenario where a handover from a source NG-RAN to a target NG-RAN is performed, an AMF is unchanged, and a SMF decides to keep an existing UPF and the handover for the terminal from the source NG-RAN to the target NG-RAN is performed using Xn is taken as an example for description.

1a. If a public land mobile network (PLMN) is configured with secondary radio access technology (RAT) usage reporting, a source NG-RAN node during an HO execution phase may provide a RAN usage data report (N2 session management (SM) information (secondary RAT usage data), an HO flag, a source to target transparent container) to the AMF. The source NG-RAN node shall provide the report only when the target NG-RAN confirms an HO over an Xn interface. The HO flag indicates to the AMF that it should buffer the N2 SM information including a usage data report before forwarding it.

1b. Target NG-RAN to AMF: N2 path switch request (a list of PDU sessions to be switched, a list of PDU sessions to be switched with the N2 SM information, a list of PDU sessions that fails to be established with a failure cause given in an N2 SM information element, UE location information). The target NG-RAN sends an N2 path switch request message to the AMF, notifies that the UE has moved to a new target cell and provides the list of PDU sessions to be switched. Tunnel information for each PDU session to be switched is included in the N2 SM information. For the PDU sessions to be switched to the target NG-RAN, the N2 path switch request message should include a list of accepted QoS flows. For each QoS flow for which an alternative QoS profile is accepted, the N2 SM information should include a reference to a fulfilled alternative QoS profile.

During an Xn HO procedure and an N2 HO procedure of the NG-RAN, the target NG-RAN provides first indication information to the SMF, the first indication information indicates whether a target NG-RAN node supports the PDU set based handling.

In some embodiments, the first indication information is included in a path switch request message during the Xn HO procedure, or the first indication information is included in an HO request acknowledge message during the N2 HO procedure.

In some embodiments, the source NG-RAN supports the PDU set based handling, and the target NG-RAN of the HO does not support the PDU set based handling. If the target NG-RAN receives a data forwarding packet, for example, a data packet directly forwarded from the source NG-RAN or indirectly forwarded from the UPF, since the source NG-RAN supports the PDU set based handling, the data forwarding packet may include the marked PDU. After receiving the data forwarding packet, the target NG-RAN may handle the marked PDU as the unmarked PDU, ignore a PDU set QoS parameter, execute a PDU QoS parameter, and ignore a protocol header extension used to identify the PDU set information in the marked PDU).

In some embodiments, the source NG-RAN does not support the PDU set based handling, and the target NG-RAN of the HO supports the PDU set based handling. If the target NG-RAN receives a data forwarding packet, for example, a data packet directly forwarded from the source NG-RAN or indirectly forwarded from the UPF, since the source NG-RAN does not support the PDU set based handling, the data forwarding packet may include the unmarked PDU. The target NG-RAN receives the data forwarding packet (a data packet received over a forwarding tunnel and before an end marker packet). Before handling of the unmarked PDU finishes, the target NG-RAN handles a received marked PDU as the unmarked PDU (so that all PDUs are handled as the unmarked PDU at the same time), ignores a PDU set QoS parameter of the marked PDU and uses a PDU QoS parameter, i.e., ignores a protocol header extension used to identify the PDU set information).

Furthermore, after the handling of the unmarked PDU finishes, the target NG-RAN may handle the marked PDU according to the PDU set QoS parameter and the PDU set information in the protocol header extension (or the PDU set information configured by the UPF, and the PDU set information in a protocol description).

In some embodiments, the source NG-RAN does not support the PDU set based handling, and the target NG-RAN of the HO supports the PDU set based handling. If the target NG-RAN receives a data forwarding packet, for example, a data packet directly forwarded from the source NG-RAN or indirectly forwarded from the UPF, since the source NG-RAN does not support the PDU set based handling, the data forwarding packet may include the unmarked PDU. The target NG-RAN may start a specific window (for example, start a timer). During a period counted by the timer, the target NG-RAN may handle a received marked PDU as the unmarked PDU, and ignore the PDU set QoS parameter. After the timer expires, the target NG-RAN may handle the marked PDU according to the PDU set QoS parameter and PDU set information in a protocol header extension.

In a possible implementation, the target NG-RAN starts the above timer after receiving the end marker packet. A duration of the timer is a continued handling HO window duration (handling of the marked PDU as the unmarked PDU during the HO procedure may have already started before receiving the end marker packet. It is easier to determine a remaining time after receiving the end marker packet.).

In a possible implementation, the target NG-RAN starts the above timer after receiving the PDU set QoS parameter from the SMF. A duration of the timer is a continued handling HO window duration (handling of the marked PDU as the unmarked PDU during the HO procedure may have already started before receiving the PDU set QoS parameter from the SMF.).

A handling HO window duration may be greater than or equal to a duration required from starting of the timer to a completion of unmarked PDU handling as predetermined by the target NG-RAN (for example, based on a local configuration or an OA configuration or a received end marker packet or a received PDU set related QoS parameter).

In a possible implementation, after receiving the PDU set QoS parameter from the SMF, the target NG-RAN may send second indication information to the SMF. The second indication information indicates whether the target NG-RAN accepts (accepts or rejects) a received PDU set QoS parameter. If the NG-RAN rejects the PDU set QoS parameter, an NG-RAN PDU set QoS handling function is not activated; or if the NG-RAN accepts the PDU set QoS parameter, the NG-RAN PDU set QoS handling function is activated.

In some embodiments, the SMF may request the target NG-RAN to activate PDU set based QoS handling for a given QoS flow. The target NG-RAN may provide to the SMF an indication of whether the PDU Set QoS parameter is accepted (accepted or rejected).

In some embodiments, the NG-RAN may provide to the SMF an indication of whether to activate the PDU set QoS parameter and a deferred apply time, or a deferred activation time (related to a start time (or a time window) of the PDU set QoS parameter applied). The time may be determined based on a timer for the marked PDU handling in the target NG-RAN.

In some embodiments, based on an indication of the target NG-RAN or the deferred apply time/the deferred activation time, the SMF configures a PDU session anchor (PSA) UPF to activate/deactivate/stop a PDU set identification and marking (performing PDU set-related identification and protocol header extension marking on a PDU data packet).

2. AMF to SMF: Nsmf_PDUSession_UpdateSMContext request (N2 SM information received from step 1b and N2 SM information from the source NG-RAN (secondary RAT usage data), UE location information, UE presence in a local area data network (LADN) service area). The N2 SM information from the source NG-RAN here is information buffered at step 1a where applicable.

The AMF sends the N2 SM information for each PDU session received in an N2 path switch request by invoking an Nsmf_PDUSession_UpdateSMContext request service operation. This information includes, from step 1, an indication regarding whether the target NG-RAN node supports the PDU set based handling that is provided by the target NG-RAN to the SMF; and a "PDU set support" indication from the target NG-RAN is provided in a path switch request message (Xn HO). The Nsmf_PDUSession_UpdateSMContext request includes either an indication that a PDU session is to be switched (together with information on N3 addressing to be used and on a transferred QoS flow) or an indication that a PDU session is to be rejected (together with a rejection cause).

If some of QoS flows of the PDU session are not accepted by the target NG-RAN, the SMF shall initiate a PDU session modification procedure to remove a non-accepted QoS flow from the PDU session after the HO procedure is completed.

3. SMF to UPF: N4 session modification request (AN tunnel information). For a PDU session that is modified by the target NG-RAN, the SMF sends an N4 session modification request message to the UPF. The SMF may notify the UPF that originates a data notification to discard downlink data for the PDU session and/or to not provide a further data notification message. Depending on different network deployments, core network (CN) tunnel information of the UPF used for a connection to the target NG-RAN and a connection to the source NG-RAN may be different, e.g., due to the source NG-RAN and target NG-RAN being located in different IP domains. In this case, the SMF may ask the UPF to allocate new CN tunnel information, providing a target network instance.

4. UPF to SMF: N4 session modification response (CN tunnel information). For a PDU session that is switched, the UPF returns an N4 session modification response message to the SMF after a requested PDU session is switched. A tunnel identifier for UL traffic is included in the response only for a PDU session whose user plane resource is not being released and requested by the SMF.

5. In order to assist a reordering function in the target NG-RAN, the UPF sends one or more "end marker" packets for each N3 tunnel on an old path immediately after switching the path. The UPF starts sending a downlink packet to the target NG-RAN.

In some embodiments, the PSA UPF sends the end marker packet to the target NG-RAN at an end of a complete PDU set. In other words, the PSA UPF starts performing PDU set identification and protocol header extension marking from a beginning of the complete PDU set (e.g., first data packet) and stops or ends performing the PDU set identification and the protocol header extension marking at the end of the complete PDU set (e.g., last data packet) (The end marker packet is sent right after the last data packet of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It starts doing so from the complete PDU set. A first PDU set includes a PDU overlapped with a data packet sending through a source forwarding tunnel (an overlapping data packet has already been sent on a source tunnel, but it is not an end of the PDU set, for example, it is a first half of the set. Then this part and an unsent second half are integrated as the complete PDU set and are sent in a new tunnel), if the end marker packet is not sent at the end of the complete PDU set (e.g., sent in the middle of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It sends a left packet of a PDU set through a source forwarding tunnel as an individual data packet. Then it starts doing so from the complete PDU set, and performs a packet identification and marks the PDU set information into the protocol header extension, if the end marker packet is not sent at the end of the complete PDU set (e.g., sent in the middle of the PDU set).

Based on an indication and/or an activation time of the NG-RAN, the SMF configures the PSA UPF to activate/deactivate the PDU Set identification and marking.

In a case where the PSA UPF identifies and marks the PDU with the PDU set information in the GTP-U header, it shall start doing so from the beginning of the complete PDU set. (In addition, if it is from the source NG-RAN and a PDU after the end marker packet is not the beginning of the complete PDU set, a part of a PDU that is already sent may be overlapped to perform PDU set encapsulation). The PSA UPF identifies and marks the PDU with the PDU set information in the GTP-U header, it shall start doing so from the beginning of the complete PDU set. The first PDU set includes a PDU that overlaps with the packet sent through the source forwarding tunnel, if the end marker packet is not sent at the end of the complete PDU set.

6. SMF to AMF: Nsmf_PDUSession_UpdateSMContext response (N2 SM information).

The SMF sends an Nsmf_PDUSession_UpdateSMContext response (N2 SM information (CN tunnel information, updated CN PDB of an accepted QoS flow, updated time sensitive communication assistance information (TSCAI) for an accepted QoS flow)) to the AMF for a PDU session which has been switched successfully. The CN tunnel information of the UPF sent to the AMF is used to setup an N3 tunnel. For each accepted guaranteed bit rate (GBR) QoS flow of a delay-critical resource type, a dynamic CN PDB and TSCAI may be updated and sent to the target NG-RAN by the SMF. The SMF may update the CN PDB and the TSCAI in the response or using a separate PDU session modification procedure, based on a local configuration.

For an XR service flow, the SMF carries a corresponding PDU set QoS parameter, flow description and other information in this message to the target NG-RAN. Or, the SMF subsequently initiates a separate PDU session modification procedure that carries the updated PDU set QoS parameter, the flow description, and other information.

If the source NG-RAN does not support an alternative QoS profile and the target NG-RAN supports it, the SMF sends the alternative QoS profile to the target NG-RAN on a per QoS flow basis, if available.

Note: Step 6 may occur at any time after receipt of the N4 session modification response at the SMF.

7. AMF to NG-RAN: N2 path switch request acknowledgement (N2 SM information, a failed PDU session, a UE radio capability ID).

8. By sending a release resource message to the source NG-RAN, the target NG-RAN confirms a success of the HO, and then triggers a release of resources with the source NG-RAN.

9. The UE may initiate a mobility registration update procedure if one of triggers of a registration procedure applies.

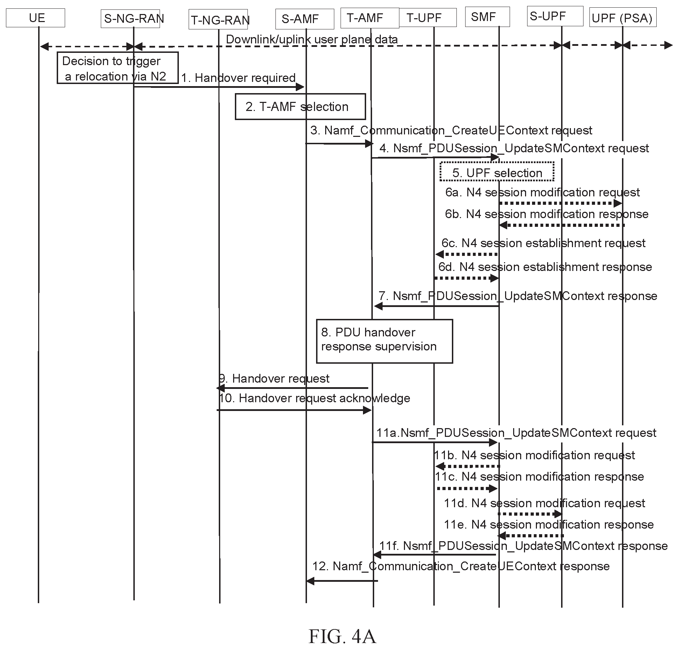

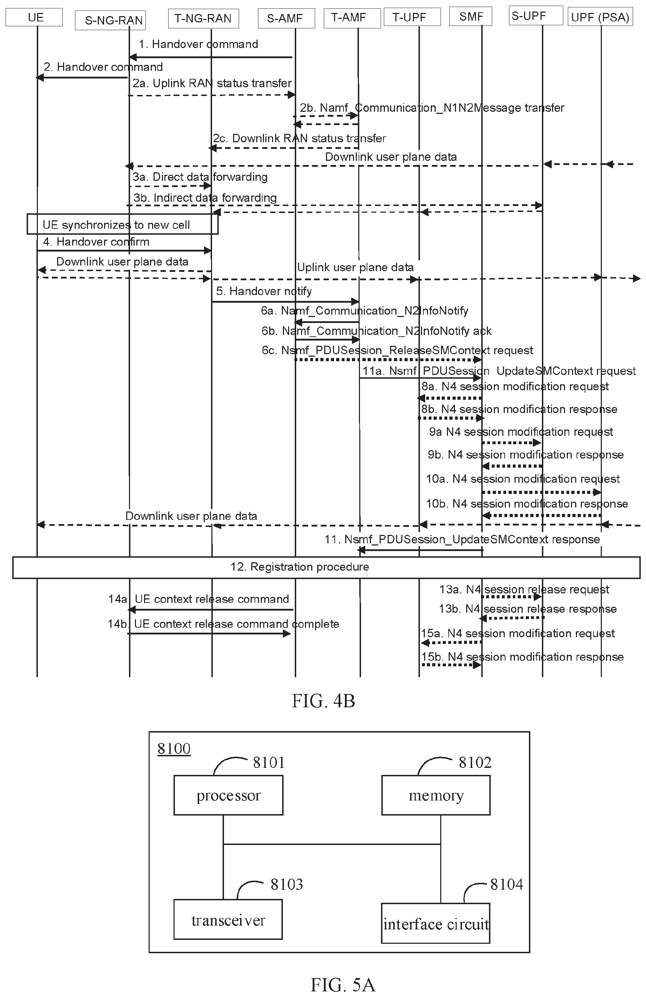

In an embodiment, as shown in FIG. 4A and FIG. 4B, an N2-based HO, of the source NG-RAN, to the target NG-RAN without an Xn interface includes a preparation phase as shown in FIG. 4A and an execution phase as shown in FIG. 4B. An example is described with a source NG-RAN as S-NG-RAN, a source AMF as S-AMF, a source UPF as S-UPF, a target NG-RAN as T-NG-RAN, a target AMF as T-AMF, and a target UPF as T-UPF.

When the source NG-RAN decides to perform a non-Xn HO, the source NG-RAN sends an N2 path switch request to an AMF. This request includes a list of PDU sessions that requires the HO, an identifier of the target NG-RAN, and other relevant information.

After receiving the N2 path switch request, the AMF begins preparing for the non-Xn HO. The AMF may need to perform some preparatory work, such as updating relevant context information, obtaining a state of the target NG-RAN, etc.

### Execution Phase:

When the preparation phase is completed, the AMF sends an N2 path switch request acknowledgement to the source NG-RAN. This indicates that the AMF is ready to execute the HO.

Based on acknowledgment of the AMF, the source NG-RAN begins preparing for an HO of the terminal. The source NG-RAN may transfer PDU session information, user data, and relevant context to the target NG-RAN.

After receiving HO-related information, the target NG-RAN prepares to accept the terminal. The target NG-RAN may allocate resources, update context information, etc.

When the target NG-RAN is ready, the source NG-RAN triggers the HO of the terminal. The source NG-RAN may send an instruction to the terminal, and send to the terminal a signal indicating to handover to the target NG-RAN.

The terminal performs communication on the target NG-RAN. The target NG-RAN is responsible for a connection and a service of the terminal.

As shown in FIG. 4A, the preparation phase includes the following steps.
1. S-NG-RAN to S-AMF: HO required (a target ID, a source to target transparent container, an SM N2 information list, a PDU session ID, an intra system HO indication).

The source to target transparent container includes NG-RAN information created by the S-NG-RAN, to be used by the T-NG-RAN, and is transparent to 5GC. It also includes for each PDU session a corresponding QoS flow/DRB information subject to data forwarding.

2-7. A new AMF and a new UPF is selected, and new UPF tunnel information is obtained.

7. SMF to T-AMF: Nsmf_PDUSession_UpdateSMContext response (PDU session ID, N2 SM information, a reason for non-acceptance).

If an N2 HO for the PDU session is accepted, the SMF includes in the Nsmf_PDUSession_UpdateSMContext response the N2 SM Information including an N3 UP address and a UL CN tunnel ID of the UPF, a QoS parameter, TSCAI and user plane security enforcement information for the target NG-RAN.

8. The T-AMF supervises an Nsmf_PDUSession_UpdateSMContext response message from an involved SMF.

9. T-AMF to T-NG-RAN: HO request (a source to target transparent container, N2 MM information, an N2 SM information list, a tracing requirement, a UE radio capability ID).The T-AMF determines the T-NG-RAN based on a target ID. The T-AMF may allocate a 5G-GUTI valid for the UE in the AMF and a target tracking area identity (TAI).

The source to target transparent container is forwarded as received from the S-NG-RAN. The N2 MM Information includes security information and a mobility restriction list if available in the T-AMF.

The N2 SM information list includes N2 SM information received from the SMF for the T-RAN in the Nsmf_PDUSession_UpdateSMContext response message received within an allowed maximum delay supervised by the T-AMF mentioned in step 8, which is prepared for the T-NG-RAN.

10. T-NG-RAN to T-AMF: HO request acknowledgement (a target to source transparent container, a list of PDU sessions to hand-over with the N2 SM information, a list of PDU sessions that fails to be established with the failure cause given in the N2 SM information element).

During an N2 HO procedure of the NG-RAN, the target NG-RAN provides to the SMF with an indication of whether a target NG-RAN node supports PDU set based handling; and a "PDU set support" indication from the target NG-RAN is provided in an HO request acknowledge message (NG HO).

In some embodiments, the source NG-RAN supports the PDU set based handling, and the target NG-RAN of the HO does not support the PDU set based handling. If the target NG-RAN receives a data forwarding packet, for example, a data packet directly forwarded from the source NG-RAN or indirectly forwarded from the UPF, since the source NG-RAN supports the PDU set based handling, the data forwarding packet may include the marked PDU. After receiving the data forwarding packet, the target NG-RAN may handle the marked PDU as the unmarked PDU, ignore a PDU set QoS parameter, execute a PDU QoS parameter, and ignore a protocol header extension used to identify the PDU set information in the marked PDU).

In some embodiments, the source NG-RAN does not support the PDU set based handling, and the target NG-RAN of the HO supports the PDU set based handling. If the target NG-RAN receives a data forwarding packet, for example, a data packet directly forwarded from the source NG-RAN or indirectly forwarded from the UPF, since the source NG-RAN does not support the PDU set based handling, the data forwarding packet may include the unmarked PDU. The target NG-RAN receives the data forwarding packet (a data packet received over a forwarding tunnel and before an end marker packet). Before handling of the unmarked PDU finishes, the target NG-RAN handles a received marked PDU as the unmarked PDU (so that all PDUs are handled as the unmarked PDU at the same time), ignores a PDU set QoS parameter of the marked PDU and uses a PDU QoS parameter, i.e., ignores a protocol header extension used to identify the PDU set information).

Furthermore, after the handling of the unmarked PDU finishes, the target NG-RAN may handle the marked PDU according to the PDU set QoS parameter and the PDU set information in the protocol header extension (or the PDU set information configured by the UPF, and the PDU set information in a protocol description).

In some embodiments, the source NG-RAN does not support the PDU set based handling, and the target NG-RAN of the HO supports the PDU set based handling. If the target NG-RAN receives a data forwarding packet, for example, a data packet directly forwarded from the source NG-RAN or indirectly forwarded from the UPF, since the source NG-RAN does not support the PDU set based handling, the data forwarding packet may include the unmarked PDU. The target NG-RAN may start a specific window (for example, start a timer). During a period counted by the timer, the target NG-RAN may handle a received marked PDU as the unmarked PDU, and ignore the PDU set QoS parameter. After the timer expires, the target NG-RAN may handle the marked PDU according to the PDU set QoS parameter and PDU set information in a protocol header extension.

In a possible implementation, the target NG-RAN starts the above timer after receiving the end marker packet. A duration of the timer is a continued handling HO window duration (handling of the marked PDU as the unmarked PDU during the HO procedure may have already started before receiving the end marker packet. It is easier to determine a remaining time after receiving the end marker packet.).

In a possible implementation, the target NG-RAN starts the above timer after receiving the PDU set QoS parameter from the SMF. A duration of the timer is a continued handling HO window duration (handling of the marked PDU as the unmarked PDU during the HO procedure may have already started before receiving the PDU set QoS parameter from the SMF.).

A handling HO window duration may be greater than or equal to a duration required from starting of the timer to a completion of unmarked PDU handling as predetermined by the target NG-RAN (for example, based on a local configuration or an OA configuration or a received end marker packet or a received PDU set related QoS parameter).

In a possible implementation, after receiving the PDU set QoS parameter from the SMF, the target NG-RAN may send second indication information to the SMF. The second indication information indicates whether the target NG-RAN accepts (accepts or rejects) a received PDU set QoS parameter. If the NG-RAN rejects the PDU set QoS parameter, an NG-RAN PDU set QoS handling function is not activated; or if the NG-RAN accepts the PDU set QoS parameter, the NG-RAN PDU set QoS handling function is activated.

In some embodiments, the SMF may request the target NG-RAN to activate PDU set based QoS handling for a given QoS flow. The target NG-RAN may provide to the SMF an indication of whether the PDU Set QoS parameter is accepted (accepted or rejected).

In some embodiments, the NG-RAN may provide to the SMF an indication of whether to activate the PDU set QoS parameter and a deferred apply time, or a deferred activation time (related to a start time (or a time window) of the PDU set QoS parameter applied). The time may be determined based on a timer for the marked PDU handling in the target NG-RAN.

In some embodiments, based on an indication of the target NG-RAN or the deferred apply time/the deferred activation time, the SMF configures a PDU session anchor (PSA) UPF to activate/deactivate/stop a PDU set identification and marking (performing PDU set-related identification and protocol header extension marking on a PDU data packet).

In the N2 SM information in the list of PDU sessions to be switched, each PDU session ID includes T-NG-RAN N3 addressing information, i.e., an N3 UP address and a tunnel ID of the T-NG-RAN for the PDU session.

The N2 SM information may also include:
- if the PDU session has at least one QoS flow subject for data forwarding, the N3 UP address and the tunnel ID of the T-NG-RAN for receiving forwarded data. The T-NG-RAN provides data forwarding addresses for each data forwarding tunnel which it decided to setup.
- for each QoS flow accepted with an alternative QoS profile, the target NG-RAN shall include a reference to a fulfilled alternative QoS profile.

11a-f. The T-AMF and the T-NG-RAN, the S-UPF, the T-UPF exchange tunnel information through the SMF. When direct forwarding is performed, step 11a and step 11f are executed. When indirect forwarding is carried out, an intermediate process of exchanging channel information is executed.

11a. AMF to SMF: Nsmf_PDUSession_UpdateSMContext request (the PDU session ID, an N2 SM response received from the T-NG-RAN in step 10).

For each N2 SM response received from the T-NG-RAN (N2 SM information included in the HO request acknowledge), the T-AMF sends a received N2 SM response to an SMF indicated by a respective PDU session ID.

If no new T-UPF is selected, the SMF stores N3 tunnel information of the T-NG-RAN from the N2 SM response if an N2 HO is accepted by the T-NG-RAN.

The SMF/UPF allocates the N3 UP address and the tunnel ID for indirect data forwarding corresponding to a data forwarding tunnel endpoint established by the T-NG-RAN.

11f. SMF to T-AMF: Nsmf_PDUSession_UpdateSMContext response (the N2 SM information).

The SMF sends an Nsmf_PDUSession_UpdateSMContext response message per PDU session to the T-AMF.

Based on an instruction and/or an activation time of the NG-RAN, the SMF configures the PSA UPF to activate/deactivate the PDU Set identification and marking.

In a case where the PSA UPF identifies and marks the PDU with the PDU set information in the GTP-U header, it shall start doing so from the beginning of the complete PDU set. (In addition, if it is from the source NG-RAN and a PDU after the end marker packet is not the beginning of the complete PDU set, a part of a PDU that is already sent may be overlapped to perform PDU set encapsulation). The PSA UPF identifies and marks the PDU with the PDU set information in the GTP-U header, it shall start doing so from the beginning of the complete PDU set. The first PDU set includes a PDU that overlaps with the packet sent through the source forwarding tunnel, if the end marker packet is not sent at the end of the complete PDU set.

The SMF creates N2 SM information including DL forwarding tunnel information to be sent to the S-NG-RAN by the AMF. The SMF includes this information in the Nsmf_PDUSession_UpdateSMContext response. The DL forwarding tunnel information may be one of: an SMF sending a session update response message, or carried by downlink forwarding information, including direct and indirect ones.
- If direct forwarding applies, the SMF includes T-NG-RAN N3 forwarding information the SMF received in step 11a.
- If an indirect forwarding tunnel is setup in step 11b or step 11d, the SMF includes T-UPF or S-UPF DL forwarding information including the N3 UP address and a DL tunnel ID of the UPF.

12. Response information of step 3, T-AMF to S-AMF: Namf_Communication_CreateUEContext response (N2 information necessary for the S-AMF to send an HO command to the S-NG-RAN including the target to source transparent container, the list of PDU sessions that fails to be established, the N2 SM information (N3 DL forwarding information, an PCF ID), [a target AMF ID]).

The target to source transport container is received from the T-NG-RAN. The N2 SM Information is received from the SMF in step 11f.

As shown in FIG. 4B, the execution phase includes the following steps.

After the above preparation phase,
1. The S-AMF initiates the HO command to the S-NG-RAN, notifying that an HO preparation is complete and to execute the HO. It carries all HO session information obtained from the S-NG-RAN and N2 SM information of each session, and T-NG-RAN N3 forwarding tunnel information for direct forwarding or S-UPF N3 forwarding tunnel information for indirect forwarding.

2 to 15b. Enhanced handling of the S-NG-RAN, the T-NG-RAN, the SMF, and the PSA UPF, and UPF end marker packet handling.

In step 10a and step 10b, after the data forwarding is completed, the PSA UPF sends the end marker packet to the S-NG-RAN after an HO path is completed, and forwards the end marker packet to the T-NG-RAN. Or, the end marker packet is forwarded to the T-NG-RAN via the T-UPF for indirect forwarding.

In some embodiments, the PSA UPF sends the end marker packet to the target NG-RAN at the end of a complete PDU set. In other words, the PSA UPF starts performing PDU set identification and protocol header extension marking from a beginning of the complete PDU set (e.g., first data packet) and stops or ends performing the PDU set identification and the protocol header extension marking at the end of the complete PDU set (e.g., last data packet) (The end marker packet is sent right after the last data packet of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It starts doing so from the complete PDU set. A first PDU set includes a PDU overlapped with a data packet sending through a source forwarding tunnel (an overlapping data packet has already been sent on a source tunnel, but it is not an end of the PDU set, for example, it is a first half of the set. Then this part and an unsent second half are integrated as the complete PDU set and are sent in a new tunnel), if the end marker packet is not sent at the end of the complete PDU set (e.g., sent in the middle of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It sends a left packet of a PDU set through a source forwarding tunnel as an individual data packet. Then it starts doing so from the complete PDU set, and performs a packet identification and marks the PDU set information into the protocol header extension, if the end marker packet is not sent at the end of the complete PDU set (e.g., sent in the middle of the PDU set).

In some embodiments, the source NG-RAN node receives one or more GTP-U end marker packet per PDU session from the UPF and copies the end marker packet into each data forwarding tunnel when it no longer needs to forward a user data packet on the tunnel.

The end marker packet sent via the data forwarding tunnel is applied to all of QoS flows forwarded via the tunnel. After the end marker packet is received via one forwarding tunnel, the target NG-RAN node may start considering a data packet of the QoS flow associated with the forwarding tunnel that is received from an NG-U PDU session tunnel.

To facilitate understanding of embodiments of the present disclosure, examples of embodiments are provided below.

QoS handling supported by the 5GS system supports, within the same QoS flow, either a PDU based QoS rule and parameter policy, or a PDU set based QoS rule and parameter policy. That is, only one set of QoS parameters is simultaneously active for handling within one QoS flow, which is called as a PDU based QoS mechanism or a PDU set based QoS mechanism.

However, in an actual network, there are NG-RANs with non-homogenous functional support, for example, a PDU set non-supporting NG-RAN and a PDU set supporting NG-RAN. Due to service continuity requirements of the XR, data forwarding needs to be performed for downlink data during an HO procedure (e.g., terminal mobility). The data forwarding supports a direct mode and an indirect mode. In the direct mode, a source NG-RAN performs forwarding to a target NG-RAN. In the indirect mode, the UPF performs data forwarding to the target NG-RAN. It needs to be noted that, in the indirect mode, the UPF performing the data forwarding may not necessarily be a UPF corresponding to the source NG-RAN.

When an HO occurs between the PDU set supporting NG-RAN and the PDU set non-supporting NG-RAN, especially from a PDU set non-supporting source NG-RAN to a PDU set supporting target NG-RAN, both the unmarked PDU and the marked PDU exist within the same QoS flow.

However, the 5GS system does not support a scenario where both the unmarked PDU and the marked PDU exist within the same QoS flow, and cannot guarantee a QoS of a corresponding QoS flow.

How to handle a problem that both the unmarked PDU and the marked PDU exist within the QoS flow is a problem that should be solved for the 5GS to guarantee XR interactive services like cloud gaming.

In embodiments of the present disclosure, the NG-RAN does not support mixed handling of the marked PDU and the unmarked PDU within the same QoS flow at the same time. Only one PDU format is handled at the same time, a QoS parameter corresponding to the only one PDU format is executed. The NG-RAN ignores a marked protocol header extension and treats it as the unmarked PDU, according to a PDU QoS parameter. Or vice versa. Or the NG-RAN discards an unfinished PDU with the marked protocol header extension. Or, by delaying an activation of a PDU set QoS handling function by the SMF, or activating but delaying an application of a PDU set QoS handling function, the two types of PDUs are handled at staggered times, so that the NG-RAN may only receive one type of PDUs at the same time, avoiding a mixed state of the marked PDU and the unmarked PDU, without requiring special handling by the NG-RAN. The NG-RAN performs corresponding handling according to a notification indication from the SMF to solve the above problem.

In some embodiments, indication handling notified by the SMF to the T-NG-RAN includes one or more of the following ways.
1) The SMF carries a PDU set active timer to the T-NG-RAN. Before the timer expires, the T-NG-RAN treats a received marked PDU as the non-marked PDU, and ignores enhanced header information carrying PDU set information.
2) The SMF carries a priority indication to the T-NG-RAN.

The priority indication may indicate at least one of:
- prioritizing the PDU set based handling after receiving the marked PDU;
- prioritizing unmarked PDU handling after receiving the marked PDU (ignoring PDU set information carried in a header extension);
- prioritizing self-execution based on a local configuration of the T-NG-RAN after receiving the marked PDU; or
- prioritizing execution according to an OAM configuration after receiving the marked PDU.

The T-NG-RAN executes a corresponding handling method based on a received priority indication.

Further, the priority indication information may also include a priority list. The priority list includes content of different priority indications and priorities corresponding to the content of different priority indications, respectively. Thus, NG-RANs with different capabilities may comprehensively execute by combining the local configuration or the OAM configuration with the priority list).

3) After receiving a PDU set supporting handling indication from the T-NG-RAN, the SMF delays initiating a PDU session modification (or initiates a session modification but indicates that a modified new QoS parameter and new handling for identifying and marking a packet are to be executed or applied with a delay according to an indicated time or an indicated time window).

In some embodiments, the SMF may carry the PDU set QoS parameter to the UPF and the NG-RAN to activate PDU set based QoS handling.

In some embodiments, the SMF notifies the UPF to perform delayed PDU set identification and marking. The SMF may determine a delay time based on a local configuration or an OAM configuration or NG-RAN notification information; the SMF may set a PDU set active timer, and after the timer expires, initiate the PDU session modification to activate PDU set QoS handling; or the SMF notifies the UPF to delay execution of a PDU set QoS and PDU identification and marking, and the UPF determines the delay time based on local data forwarding/an end marker packet/a time/a local configuration/an OAM configuration, and delays the execution of the PDU set QoS and the PDU identification and marking. The UPF and the NG-RAN execute according to an SMF notification, including activating the PDU set QoS handling, and/or performing the delayed PDU set identification and marking.

In some embodiments, after the SMF delays an activation session modification and update of a QoS parameter, or delays an application after activation and update, arrival times of the two types of PDUs (marked PDU and unmarked PDU) at the NG-RAN are staggered. Thus, the NG-RAN may only receive one type of PDU at the same time, avoiding a mixed state of the marked PDU and the unmarked PDU, without requiring special handling by the NG-RAN. Or, arrival times of the two types of PDUs (marked PDU and unmarked PDU) at the NG-RAN are staggered as much as possible. For a small amount of mixed PDUs, PDUs that do not match may be discarded according to a QoS parameter, or handled by functionally ignoring a protocol header extension.

In some embodiments, the PSA UPF sends the end marker packet to the target NG-RAN at the end of a complete PDU set. In other words, the PSA UPF starts performing PDU set identification and protocol header extension marking from a beginning of the complete PDU set (e.g., first data packet) and stops or ends performing the PDU set identification and the protocol header extension marking at the end of the complete PDU set (e.g., last data packet) (The end marker packet is sent right after the last data packet of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It starts doing so from the complete PDU set. A first PDU set includes a PDU overlapped with a data packet sending through a source forwarding tunnel (an overlapping data packet has already been sent on a source tunnel, but it is not an end of the PDU set, for example, it is a first half of the set. Then this part and an unsent second half are integrated as the complete PDU set and are sent in a new tunnel), if the end marker packet is not sent at the end of the complete PDU set (e.g., sent in the middle of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It sends a left packet of a PDU set through a source forwarding tunnel as an individual data packet. Then it starts doing so from the complete PDU set, and performs a packet identification and marks the PDU set information into the protocol header extension, if the end marker packet is not sent at the end of the complete PDU set (e.g., sent in the middle of the PDU set).

In an embodiment, as shown in FIG. 3, a scenario where a handover from a source NG-RAN to a target NG-RAN is performed, an AMF is unchanged, and a SMF decides to keep an existing UPF and the handover for the terminal from the source NG-RAN to the target NG-RAN is performed using Xn is taken as an example for description.

1a. If a PLMN is configured with secondary RAT usage reporting, a source NG-RAN node during an HO execution phase may provide a RAN usage data report (N2 SM information (secondary RAT usage data), an HO flag, a source to target transparent container) to the AMF. The source NG-RAN node shall provide the report only when the target NG-RAN confirms an HO over an Xn interface. The HO flag indicates to the AMF that it should buffer the N2 SM information including a usage data report before forwarding it.

1b. Target NG-RAN to AMF: N2 path switch request (a list of PDU sessions to be switched and the N2 SM information, a list of PDU sessions that fails to be established with a failure cause given in an N2 SM information element, UE location information).

The target NG-RAN sends an N2 path switch request message to the AMF, notifies that the UE has moved to a new target cell and provides the list of PDU sessions to be switched. AN tunnel information for each PDU session to be switched is included in the N2 SM information.

For the PDU sessions to be switched to the target NG-RAN, the N2 path switch request message should include a list of accepted QoS flows. For each QoS flow for which an alternative QoS profile is accepted, the N2 SM information should include a reference to a fulfilled alternative QoS profile.

In some embodiments, during an Xn HO procedure of the NG-RAN, the target NG-RAN provides an indication to the SMF, the indication indicates whether a target NG-RAN node supports PDU set based handling. A "PDU set support or not" indication from the target NG-RAN is included in a path switch request message (Xn HO).

2. The AMF sends an Nsmf_PDUSession_UpdateSMContext request to the SMF (the N2 SM information received from the T-NG-RAN in step 1b and the N2 SM information (secondary RAT usage data) from the source NG-RAN, the UE location information, UE presence in an LADN service area). The N2 SM information here from the source NG-RAN is one buffered at step 1a when applicable.

The AMF sends the N2 SM information by invoking an Nsmf_PDUSession_UpdateSMContext request service operation for each PDU session received in an N2 path switch request. These PDU session lists are received in the N2 path switch request. This information includes, from step 1, the target NG-RAN provides to the SMF with an indication of whether the target NG-RAN node supports the PDU set based handling; and a "PDU set support" indication from the target NG-RAN is provided in a path switch request message (Xn HO).

The Nsmf_PDUSession_UpdateSMContext request includes one of an indication that the PDU session is to be switched (together with information on an N3 addressing to be used and on a transferred QoS flow) or an indication that the PDU session is to be rejected (together with a rejection cause).

If some of the QoS flow of a PDU session are not accepted by the target NG-RAN, the SMF shall initiate a PDU session modification procedure to remove a non-accepted QoS flow from the PDU session after the HO procedure is completed.

### 3. SMF to UPF: N4 session modification request (AN tunnel information)

For a PDU session that is modified by the target NG-RAN, the SMF sends an N4 session modification request message to the UPF. The SMF may notify the UPF that originates a data notification to discard downlink data for the PDU session and/or to not provide a further data notification message.

Depending on network deployments, CN tunnel information of the UPF used for a connection to the target NG-RAN and a connection to the source NG-RAN may be different, e.g., due to the source NG-RAN and target NG-RAN being located in different IP domains. In this case, the SMF may ask the UPF to allocate new CN tunnel information, providing a target network instance.

### 4. UPF to SMF: N4 session modification response (CN tunnel information)

For a PDU session that is switched, the UPF returns an N4 session modification response message to the SMF after a requested PDU session has completed the switch. A tunnel identifier for UL traffic is included only for a PDU session whose user plane resource is not being released and requested by the SMF.

5. In order to assist a reordering function in the target NG-RAN, the UPF sends one or more "end marker" packets for each N3 tunnel on an old path immediately after switching the path. The UPF starts sending a downlink packet to the target NG-RAN.

In some embodiments, the PSA UPF sends the end marker packet to the target NG-RAN at the end of a complete PDU set. In other words, the PSA UPF starts performing PDU set identification and protocol header extension marking from a beginning of the complete PDU set (e.g., first data packet) and stops or ends performing the PDU set identification and the protocol header extension marking at the end of the complete PDU set (e.g., last data packet) (The end marker packet is sent right after the last data packet of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It starts doing so from the complete PDU set. A first PDU set includes a PDU overlapped with a data packet sending through a source forwarding tunnel (an overlapping data packet has already been sent on a source tunnel, but it is not an end of the PDU set, for example, it is a first half of the set. Then this part and an unsent second half are integrated as the complete PDU set and are sent in a new tunnel), if the end marker packet is not sent at the end of the complete PDU set (e.g., sent in the middle of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It sends a left packet of a PDU set through a source forwarding tunnel as an individual data packet. Then it starts doing so from the complete PDU set, and performs a packet identification and marks the PDU set information into the protocol header extension, if the end marker packet is not sent at the end of the complete PDU set (e.g., sent in the middle of the PDU set).

Based on an indication and/or an activation time of the NG-RAN, the SMF configures the PSA UPF to activate/deactivate the PDU Set identification and marking.

In a case where the PSA UPF identifies and marks the PDU with the PDU set information in the GTP-U header, it shall start doing so from the beginning of the complete PDU set. (In addition, if it is from the source NG-RAN and a PDU after the end marker packet is not the beginning of the complete PDU set, a part of a PDU that is already sent may be overlapped to perform PDU set encapsulation). The PSA UPF identifies and marks the PDU with the PDU set information in the GTP-U header, it shall start doing so from the beginning of the complete PDU set. The first PDU set includes a PDU that overlaps with the packet sent through the source forwarding tunnel, if the end marker packet is not sent at the end of the complete PDU set.

6. The SMF sends to AMF a Nsmf_PDUSession_UpdateSMContext response (N2 SM information).

The SMF sends the Nsmf_PDUSession_UpdateSMContext response (N2 SM information (CN tunnel information, updated CN PDB of an accepted QoS flow, updated TSCAI for an accepted QoS flow)) to the AMF for a PDU session which has been switched successfully. The CN tunnel information of the UPF sent to the AMF is used to setup an N3 tunnel. For each accepted GBR QoS flow of a delay-critical resource type, a dynamic CN PDB and TSCAI may be updated and sent to the target NG-RAN by the SMF. The SMF may update the CN PDB and the TSCAI in the response based on a local configuration or using a separate PDU session modification procedure to update,.

Note: Step 6 may occur at any time after receipt of an N4 session modification response at the SMF.

In embodiments of the present disclosure, the NG-RAN does not support mixed handling of the marked PDU and the unmarked PDU within the same QoS flow at the same time. Only one PDU format is handled at the same time, a QoS parameter corresponding to the only one PDU format is executed. The NG-RAN ignores a marked protocol header extension and treats it as the unmarked PDU, according to a PDU QoS parameter. Or vice versa. Or the NG-RAN discards an unfinished PDU with a marked protocol header extension. Or, by delaying an activation of a PDU set QoS handling function by the SMF, or activating but delaying an application of a PDU set QoS handling function, the two types of PDUs are handled at staggered times, so that the NG-RAN may only receive one type of PDUs at the same time, avoiding a mixed state of the marked PDU and the unmarked PDU, without requiring special handling by the NG-RAN. The NG-RAN performs corresponding handling according to a notification indication from the SMF to solve the above problem.

In some embodiments, indication handling notified by the SMF to the T-NG-RAN includes one or more of the following ways.
1) The SMF carries a PDU set active timer to the T-NG-RAN. Before the timer expires, the T-NG-RAN treats a received marked PDU as the non-marked PDU, and ignores enhanced header information carrying PDU set information.
2) The SMF carries a priority indication to the T-NG-RAN.

The priority indication may indicate at least one of:
- prioritizing the PDU set based handling after receiving the marked PDU;
- prioritizing unmarked PDU handling after receiving the marked PDU (ignoring PDU set information carried in a header extension);
- prioritizing self-execution based on a local configuration of the T-NG-RAN after receiving the marked PDU; or
- prioritizing execution according to an OAM configuration after receiving the marked PDU.

The T-NG-RAN executes a corresponding handling method based on a received priority indication.

Further, the priority indication information may also include a priority list. The priority list includes content of different priority indications and priorities corresponding to the content of different priority indications, respectively. Thus, NG-RANs with different capabilities may comprehensively execute by combining the local configuration or the OAM configuration with the priority list).

3) After receiving a PDU set supporting handling indication from the T-NG-RAN, the SMF delays initiating a PDU session modification (or initiates a session modification but indicates that a modified new QoS parameter and new handling for identifying and marking a packet are to be executed or applied with a delay according to an indicated time or an indicated time window).

In some embodiments, the SMF may carry the PDU set QoS parameter to the UPF and the NG-RAN to activate PDU set based QoS handling.

In some embodiments, the SMF notifies the UPF to perform delayed PDU set identification and marking. The SMF may determine a delay time based on a local configuration or an OAM configuration or NG-RAN notification information; the SMF may set a PDU set active timer, and after the timer expires, initiate the PDU session modification to activate PDU set QoS handling; or the SMF notifies the UPF to delay execution of a PDU set QoS and PDU identification and marking, and the UPF determines the delay time based on local data forwarding/an end marker packet/a time/a local configuration/an OAM configuration, and delays the execution of the PDU set QoS and the PDU identification and marking. The UPF and the NG-RAN execute according to an SMF notification, including activating the PDU set QoS handling, and/or performing the delayed PDU set identification and marking.

In some embodiments, after the SMF delays an activation session modification and update of a QoS parameter, or delays an application after activation and update, arrival times of the two types of PDUs (marked PDU and unmarked PDU) at the NG-RAN are staggered. Thus, the NG-RAN may only receive one type of PDU at the same time, avoiding a mixed state of the marked PDU and the unmarked PDU, without requiring special handling by the NG-RAN. Or, arrival times of the two types of PDUs (marked PDU and unmarked PDU) at the NG-RAN are staggered as much as possible. For a small amount of mixed PDUs, PDUs that do not match may be discarded according to a QoS parameter, or handled by functionally ignoring a protocol header extension.

For an XR service flow, the SMF carries a corresponding PDU set QoS parameter, flow description and other information in this message to the target NG-RAN. Or, the SMF subsequently initiates a separate PDU session modification procedure that carries the updated PDU set QoS parameter, the flow description, and other information.

If the source NG-RAN does not support an alternative QoS profile and the target NG-RAN supports it, the SMF sends the alternative QoS profile to the target NG-RAN on a per QoS flow basis, if available.

7. AMF to NG-RAN: N2 path switch request acknowledgement (N2 SM information, a failed PDU session, a UE radio capability ID).

8. By sending a release resource message to the source NG-RAN, the target NG-RAN confirms a success of the HO, and then triggers a release of resources with the source NG-RAN.

9. The UE may initiate a mobility registration update procedure if one of triggers of a registration procedure applies.

In an embodiment, as shown in FIG. 4A and FIG. 4B, an N2-based HO, of the source NG-RAN, to the target NG-RAN without an Xn interface includes a preparation phase as shown in FIG. 4A and an execution phase as shown in FIG. 4B. An example is described with a source NG-RAN as S-NG-RAN, a source AMF as S-AMF, a source UPF as S-UPF, a target NG-RAN as T-NG-RAN, a target AMF as T-AMF, and a target UPF as T-UPF.

During the preparation phase, step 10 carries an indication supported by the PDU set of the T-NG-RAN to the SMF.

As shown in FIG. 4A, the preparation phase:
1. The S-RAN sends to the S-AMF HO required (a target ID, a source to target transparent container, an SM N2 information list, a PDU session ID, an intra system HO indication).

The source to target transparent container includes NG-RAN information created by the S-NG-RAN, to be used by the T-NG-RAN, and is transparent to 5GC. It also includes for each PDU session a corresponding QoS flow/DRB information subject to data forwarding.

2-7. A new AMF and a new UPF is selected, and new UPF tunnel information is obtained.

7. SMF to T-AMF: Nsmf_PDUSession_UpdateSMContext response (PDU session ID, N2 SM information, a reason for non-acceptance).

If an N2 HO for the PDU session is accepted, the SMF includes in the Nsmf_PDUSession_UpdateSMContext response the N2 SM Information including an N3 UP address and a UL CN tunnel ID of the UPF, a QoS parameter, TSCAI and user plane security enforcement information for the target NG-RAN.

8. The T-AMF supervises an Nsmf_PDUSession_UpdateSMContext response message from an involved SMF.

9. T-AMF to T-NG-RAN: HO request (a source to target transparent container, N2 MM information, an N2 SM information list, a tracing requirement, a UE radio capability ID). The T-AMF determines the T-NG-RAN based on a target ID. The T-AMF may allocate a 5G-GUTI valid for the UE in the T-AMF and a target TAI.

The source to target transparent container is forwarded as received from the S-NG-RAN. The N2 MM Information includes security information and a mobility restriction list if available in the T-AMF.

The N2 SM information list includes N2 SM information received from the SMF for the T-RAN in the Nsmf_PDUSession_UpdateSMContext response message received within an allowed maximum delay supervised by the T-AMF mentioned in step 8, which is prepared for the T-NG-RAN.

10. T-NG-RAN to T-AMF: HO request acknowledgement (a target to source transparent container, a list of PDU sessions to hand-over with the N2 SM information, a list of PDU sessions that fails to be established with the failure cause given in the N2 SM information element).

During an N2 HO procedure of the NG-RAN, the T-NG-RAN provides to the SMF with an indication of whether a T-NG-RAN node supports PDU set based handling; and a "PDU set support" indication from the T-NG-RAN is provided in a path switch request message (Xn HO) (a message in Step 10).

The N2 SM information in the "list of PDU sessions to be switched" includes T-NG-RAN N3 addressing information of each PDU session, i.e., an N3 UP address of the PDU session and a tunnel ID of the T-NG-RAN.

The N2 SM information may also include:
- if the PDU session has at least one QoS flow subject for data forwarding, the N3 UP address and the tunnel ID of the T-NG-RAN for receiving forwarded data. The T-NG-RAN provides data forwarding addresses for each data forwarding tunnel which it decided to setup.
- for each QoS flow with an alternative QoS configuration, the T-NG-RAN shall include a reference to a fulfilled alternative QoS configuration.

11a-f. The T-AMF and the T-NG-RAN, the S-UPF, the T-UPF exchange tunnel information through the SMF. When direct forwarding is performed, step 11a and step 11f are executed. When indirect forwarding is carried out, an intermediate process of exchanging channel information is executed.

11a. AMF to SMF: Nsmf_PDUSession_UpdateSMContext request (the PDU session ID, an N2 SM response received from the T-NG-RAN in step 10).

For each N2 SM response received from the T-NG-RAN (N2 SM information included in the HO request acknowledge), the T-AMF sends a received N2 SM response to an SMF indicated by a respective PDU session ID.

If no new T-UPF is selected, the SMF stores N3 tunnel information of the T-NG-RAN from the N2 SM response if an N2 HO is accepted by the T-NG-RAN.

The SMF/UPF allocates the N3 UP address and the tunnel ID for indirect data forwarding corresponding to a data forwarding tunnel endpoint established by the T-NG-RAN.

11f. SMF to T-AMF: Nsmf_PDUSession_UpdateSMContext response (the N2 SM information).

The SMF sends an Nsmf_PDUSession_UpdateSMContext response message per PDU session to the T-AMF.

The SMF creates the N2 SM information including downlink (DL) forwarding tunnel information to be sent by the AMF to the S-NG-RAN. The SMF includes the information in the Nsmf_PDUSession_UpdateSMContext response message. The DL forwarding tunnel information may be one of: an SMF sending session update response message, or carried by downlink forwarding information, including direct and indirect ones.
- If direct forwarding applies, the SMF includes T-NG-RAN N3 forwarding information the SMF received in step 11a.
- If an indirect forwarding tunnel is setup in step 11b or 11d, the SMF includes T-UPF or S-UPF DL forwarding information including the N3 UP address and a DL tunnel ID of the UPF.

12. Response information of step 3, T-AMF to S-AMF: Namf_Communication_CreateUEContext response (N2 information necessary for the S-AMF to send an HO command to the S-NG-RAN including the target to source transparent container, the list of PDU sessions that failed to be established, the N2 SM information (N3 DL forwarding information, an PCF ID), [a target AMF ID]).

Target to source transparent container: The container is received from the T-NG-RAN and is used to support an operation of sending the HO command to the S-NG-RAN. It includes NG-RAN information created by the S-NG-RAN to be used by the T-NG-RAN and is transparent to 5GC. It also includes for each PDU session a corresponding QoS flow/DRB information subject to data forwarding.

List of PDU sessions that fails to be established: This lists the PDU sessions that fails to be established during an HO procedure with a given failure cause.

N2 SM information (N3 DL forwarding information, and PCF ID): This information is received from the SMF in step 11f. The N3 DL forwarding information refers to downlink forwarding tunnel information for the target T-NG-RAN included in the N2 SM information, including the N3 UP address and the downlink tunnel ID. The PCF ID is an identification of a policy control function, indicating an ID of the policy control function.

Target AMF ID: an identification of the target AMF may be included, if needed.

T-AMF to S-AMF: the Namf_Communication_CreateUEContext response provides various information needed to send the HO command to support the HO procedure from the S-AMF to the S-NG-RAN.

The target to source transmission container is received from the T-NG-RAN. The N2 SM information is received from the SMF in step 11f.

As shown in FIG. 4B, the execution phase includes the following steps.

After the above preparation phase,
1. The S-AMF initiates the HO command to the S-NG-RAN, notifying that an HO preparation is complete and to execute the HO. It carries all HO session information obtained from the S-NG-RAN and N2 SM information of each session, and T-NG-RAN N3 forwarding tunnel information for direct forwarding or S-UPF N3 forwarding tunnel information for indirect forwarding.

2 to 15b. Enhanced handling of the S-NG-RAN, the T-NG-RAN, the SMF, and the PSA UPF, and UPF end marker packet handling. A main enhanced indication notified by the SMF may be executed in steps 10, 11, 15, or by initiating a separate session modification procedure.

In step 10a and step 10b, after the data forwarding is completed, the PSA UPF sends the end marker packet to the S-NG-RAN after an HO path is completed, and forwards the end marker packet to the T-NG-RAN. Or, the end marker packet is forwarded to the T-NG-RAN via the T-UPF for indirect forwarding.

In some embodiments, the PSA UPF sends the end marker packet to the target NG-RAN at the end of a complete PDU set. In other words, the PSA UPF starts performing PDU set identification and protocol header extension marking from a beginning of the complete PDU set (e.g., first data packet) and stops or ends performing the PDU set identification and the protocol header extension marking at the end of the complete PDU set (e.g., last data packet) (The end marker packet is sent right after the last data packet of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It starts doing so from the complete PDU set. A first PDU set includes a PDU overlapped with a data packet sending through a source forwarding tunnel (an overlapping data packet has already been sent on a source tunnel, but it is not an end of the PDU set, for example, it is a first half of the set. Then this part and an unsent second half are integrated as the complete PDU set and are sent in a new tunnel), if the end marker packet is not sent at the end of the complete PDU set (e.g., sent in the middle of the PDU set).

Or, the PSA UPF identifies and marks a PDU with PDU set information (e.g., identifies a PDU with an RTP protocol header extension or an RTCP protocol header extension, maps a protocol header extension including the PDU set information to a GTP-U protocol header extension, and carries the PDU set information in the GTP-U protocol header extension to provide to the NG-RAN). It sends a left packet of a PDU set through a source forwarding tunnel as an individual data packet. Then it starts doing so from the complete PDU set, and performs a packet identification and marks the PDU set information into the protocol header extension, if the end marker packet is not sent at the end of the complete PDU set (e.g., sent in the middle of the PDU set).

Embodiments of the present disclosure also provide an apparatus for implementing any one of the above methods. For example, an apparatus is provided, including units or modules for implementing steps executed by the terminal in any one of the above methods. For another example, another apparatus is provided, including units or modules for implementing steps executed by the network device (for example, an access network device, a core network function node, a core network device, etc.) in any one of the above methods.

It should be noted that the division of units or modules in the above apparatuses is merely a division of logical functions. In actual implementations, the units may be fully or partially integrated into a single physical entity or may be physically separated. In addition, the units or modules in the apparatus may be implemented in the form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of the processor invoking software, or fully implemented in the form of the hardware circuit, or partially implemented in the form of the processor invoking software and the remaining part implemented in the form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 5A is a block diagram of a communication device 8100 according to embodiments of the present disclosure. The communication device 8100 may be a network device (for example, an access network device, a core network device, etc.), or a terminal (for example, a user equipment, etc.), or a chip, a chip system, or a processor that supports the network device to implement any one of the above methods, or a chip, a chip system, or a processor that supports the terminal to implement any one of the above methods. The communication device 8100 may be used to implement the method described in the above method embodiments. For details, reference may be made to descriptions in the above method embodiments.

As shown in FIG. 5A, the communication device 8100 includes one or more processors 8101. The processor 8101 may be a general-purpose processor or a special-purpose processor. For example, it may be a baseband processor or a central processor. The baseband processor is configured to process communication protocols and communication data, and the central processor is configured to control communication devices (such as base stations, baseband chips, terminals, terminal chips, DU or CU, etc.) to execute computer programs and process program data. Optionally, the communication device 8100 is configured to execute any one of the above methods. Optionally, the one or more processors 8101 are configured to invoke instructions to cause the communication device 8100 to execute any one of the above methods.

In some embodiments, the communication device 8100 further includes one or more transceivers 8102. When the communication device 8100 includes the one or more transceivers 8102, the transceiver 8102 executes at least one of communication steps such as sending and/or receiving in the above method, and the processor 8101 executes at least one of other steps. In optional embodiments, the transceiver may include a receiver and/or a transmitter. The receiver and the transmitter may be separate or integrated together. Optionally, terms such as transceiver, transceiver unit, transceiver circuit, interface circuit, and interface may be used interchangeably. Terms such as transmitter, transmitting unit, transmitting machine, and transmitting circuit may be used interchangeably. Terms such as receiver, receiving unit, receiving machine, and receiving circuit may be used interchangeably.

In some embodiments, the communication device 8100 further includes one or more memories 8103 for storing data. Optionally, all or part of the memories 8103 may also be located outside the communication device 8100. In an optional embodiment, the communication device 8100 may include one or more interface circuits 8104. Optionally, the interface circuit 8104 is connected to the memory 8102. The interface circuit 8104 may be used to receive data from the memory 8102 or other devices, and may be used to send data to the memory 8102 or other devices. For example, the interface circuit 8104 may read data stored in the memory 8102 and send the data to the processor 8101.

The communication device 8100 described in the above embodiments may be a network device or a terminal, but the scope of the communication device 8100 described in the present disclosure is not limited to this. The structure of the communication device 8100 is not limited by FIG. 5A. The communication device may be a stand-alone device or may be part of a larger device. For example, the communication device may be: (1) a stand-alone IC, a chip, a chip system or a subsystem; (2) a collection of ICs including one or more ICs. Optionally, the collection of ICs may also include storage components for storing data and programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

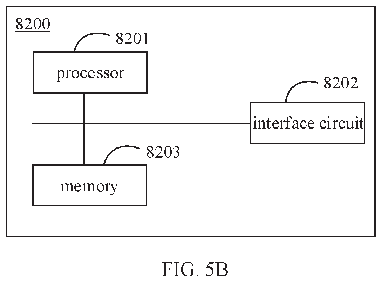

FIG. 5B is a block diagram of a chip 8200 according to embodiments of the present disclosure. For the case where the communication device 8100 may be a chip or a chip system, reference may be made to the block diagram of the chip 8200 shown in FIG. 5B, but it is not limited to this.

The chip 8200 includes one or more processors 8201. The chip 8200 is configured to execute any one of the above methods.

In some embodiments, the chip 8200 further includes one or more interface circuits 8202. Optionally, terms such as interface circuit, interface, transceiver pin, etc. may be used interchangeably. In some embodiments, the chip 8200 further includes one or more memories 8203 for storing data. Optionally, all or part of the memories 8203 may be located outside the chip 8200. Optionally, the interface circuit 8202 is connected to the memory 8203. The interface circuit 8202 may be used to receive data from the memory 8203 or other devices, and the interface circuit 8202 may be used to send data to the memory 8203 or other devices. For example, the interface circuit 8202 may read data stored in the memory 8203 and send the data to the processor 8201.

In some embodiments, the interface circuit 8202 performs at least one of communication steps such as sending and/or receiving in the above method. For example, the interface circuit 8202 performing the communication steps such as sending and/or receiving in the above method refers to: the interface circuit 8202 performing a data interaction between the processor 8201, the chip 8200, the memory 8203, or the transceiver. In some embodiments, the processor 8201 performs at least one of other steps.

Modules and/or devices described in each embodiment such as virtual apparatus, physical apparatus, chip, etc. may be arbitrarily combined or separated based on a condition. Optionally, some or all of the steps may also be executed by a plurality of modules and/or devices in cooperation, which is not limited here.

The present disclosure also provides a storage medium for storing instructions. When the instructions are running on the communication device 8100, the communication device 8100is caused to implement any one of the above methods. Optionally, the storage medium is an electronic storage medium. Optionally, the storage medium is a computer-readable storage medium, but is not limited to this, and it may also be a storage medium readable by other devices. Optionally, the storage medium may be a non-transitory storage medium, but is not limited to this, and it may also be a transitory storage medium.

The present disclosure also provides a program product. When the program product is executed by the communication device 8100, the communication device 8100is caused to implement any one of the above methods. Optionally, the program product is a computer program product.

The present disclosure also provides a computer program. When the computer program is running on a computer, the computer is caused to implement any one of the above methods.

## Claims

1. A method for processing a service, comprising:
sending, by a first access network device, first indication information to a first network element, wherein the first indication information indicates whether the first access network device supports packet data unit (PDU) set based handling.

2. The method of claim 1, further comprising:
determining, by the first access network device, to take a marked PDU in a data forwarding packet as an unmarked PDU for handling, wherein the first access network device does not support the PDU set based handling and the data forwarding packet comprises the marked PDU; or
determining, by the first access network device, to take a marked PDU in a data forwarding packet as an unmarked PDU for handling before unmarked PDU handling ends, wherein the first access network device supports the PDU set based handling and the data forwarding packet comprises the marked PDU.

3. The method of claim 2, further comprising:
starting a timer in a case that a specific condition is satisfied; and
starting marked PDU handling when the timer expires, wherein a duration of the timer is a duration for the unmarked PDU handling.

4. The method of claim 3, wherein the specific condition comprises at least one of:
receiving an end marker packet; or
receiving a PDU set based quality of service (QoS) parameter from the first network element and sending an activation response to the first network element.

5. The method of claim 2, further comprising:
sending, by the first network element, an activation indication to the first access network device, wherein the activation indication indicates that the first access network device activates the PDU set based handling.

6. The method of claim 5, further comprising:
sending, by the first access network device, an activation response to the first network element, wherein the activation response indicates at least one of:
whether a PDU set based QoS parameter is in an active state;
an activation time; or
a delay activation time.

7. The method of claim 2, further comprising:
sending, by the first access network device, second indication information to the first network element, wherein the second indication information indicates a duration required for the unmarked PDU handling;
determining, by the first network element, a delay activation time according to the second indication information; and
sending, by the first network element, an activation indication to the first access network device after the delay activation time, wherein the activation indication indicates that the first access network device activates the PDU set based handling.

8. The method of any one of claims 5 to 7, wherein the activation indication comprises a PDU set based QoS parameter.

9. The method of claim 1, further comprising:
receiving, by the first access network device, a priority indication from the first network element; and
performing, by the first network element, marked PDU handling and unmarked PDU handling according to the priority indication,
wherein the priority indication indicates at least one of:
prioritizing the PDU set based handling after receiving the marked PDU;
prioritizing unmarked PDU handling after receiving the marked PDU;
prioritizing self-execution based on a local configuration of the first access network device after receiving the marked PDU; or
prioritizing execution according to an operation, administration and maintenance (OAM) configuration after receiving the marked PDU.

10. A storage medium for storing instructions that, when executed by a communication device, cause the communication device to implement the method of any one of claims 1 to 9.
